# EUROPEAN PATENT APPLICATION

(11) **EP 1 676 882 A1**
(43) Date of publication of application: **05.07.2006**
(21) Application number: 05112696.9
(22) Date of filing: 22.12.2005
(51) Int. Cl.: C08L 9/00, C08L 21/00, C08K 5/48, B60C 1/00

(54) **Tread cap composition and method of making same**

(30) Priority: 30.12.2004 US 640788 P
(71) Applicant: THE GOODYEAR TIRE & RUBBER COMPANY, Akron, Ohio 44316-0001 (US)
(72) Inventor: Schmitz, Frank, L-7782, Bissen (LU); Corvasce, Filomeno Gennaro, L-9170, Mertzig (LU); Jacoby, Claude Charles, L-6615, Wasserbillig (LU)
(74) Representative: Kutsch, Bernd

(57) **Abstract**

A tread cap composition is disclosed resulting from a combination of components including: a conjugated diene-based elastomer; a reinforcing filler; an oil softener; a silane coupling agent; and an ultra high molecular weight polyethylene ("UHMWPE").

## Description

### Field of the Invention

This invention is directed to a method of making a tread cap composition, and to a tire having a bead cap prepared according to this method.

### Description of Related Art

In developing a tread cap that provides an enhanced performance characteristic, tread cap formulations have been proposed that include an ultra high molecular weight polyethylene macro filler and a carbon black reinforcing filler.

While such a formulation may provide an enhanced performance characteristic, it does so at the expense of other desirable properties. For example, the composition may have an undesirable compound stiffness. In addition, other performance characteristics may be less than desirable. Therefore, there is a need for improved tread cap formulations.

### Summary of the Invention

A tread cap composition, in accordance with the principles of the invention, may be a composition resulting from the combination of components including: a conjugated diene-based elastomer; a reinforcing filler; a mineral- or vegetable- oil softener; a silane coupling agent; and an ultra high molecular weight polyethylene ("UHMWPE"). As used herein, the term "ultra high molecular weight" means a molecular weight of 500,000 or more.

One aspect of the invention is directed to a method of making a tread-cap composition according to claim 1. The method includes the steps of: mixing, at a temperature in a range of from 135°C to 180°C, ingredients including: 100 phr of at least one conjugated diene-based elastomer; from 30 to 130 phr of at least one reinforcing filler; from 2 to 55 phr of at least one oil softener, the oil softener selected from the group consisting of a mineral oil having a PCA content of less than 3% by weight, a vegetable oil, and combinations thereof; and from 4 to 20 phr of at least one silane coupling agent, thereby forming a first mixture. The method further includes the step of subsequently mixing, at a temperature of less than 135°C, ingredients including: the first mixture; and from 2 to 50 phr of an ultrahigh molecular weight polyethylene ("UHMWPE"), thereby forming the tread-cap composition.

Other aspects of the invention include a tread-cap composition, a tread cap made from a tread-cap composition, and a tire that includes such a tread cap.

### Description of Preferred Embodiments of the Invention

The conjugated diene-based elastomer may be any suitable elastomer or combination of elastomers. Examples include polybutadiene rubber (including high cis and high vinyl), polyisoprene, natural rubber, isoprene-butadiene copolymer, emulsion-polymerized styrene-butadiene rubber, and solution-polymerized styrene-butadiene rubber (including low, mid, and high vinyl). Advantageously, the conjugated diene-based elastomer may be a sulfur-vulcanizable elastomer containing olefinic unsaturation.

The reinforcing filler may be any suitable reinforcing filler or combination of fillers. For example, the filler may include silica and/or carbon black. If desired, the reinforcing filler may be present in an amount of from 30 to 130 phr.

The oil softener may be any suitable mineral- or vegetable- oil softener or combination of such oil softeners. Examples of mineral oil softeners include a treated distillate aromatic extract ("TDAE") oil, a mild extraction solvate ("MES") oil, and a special residual aromatic extract ("S-RAE"). Advantageously, the mineral oil softener may have a polycyclic aromatic composition ("PCA") content of less than 3% by weight. Also, if desired, the softener or combination of softeners may be present in an amount of from 2 to 55 phr. Examples of commercially available TDAE, MES, and S-RAE oils include Vivatec 500 oil from H&R Wasag AG (a TDAE oil), Catenex SNR oil from Shell (an MES oil), and NC140 oil from Japan Energy Corp. (an S-RAE oil).

The silane coupling agent may be any suitable agent or combination of agents. Examples include bis-3-(triethoxysilylpropyl) disulfide ("TESPD"), bis-3-(triethoxysilylpropyl) tetrasulfide ("TESPT"), and/or a blocked mercaptosilane. Advantageously, the blocked mercaptosilane is one or more of NXT or NXT-LoV from GE Silicones. If desired the silane coupling agent may be present in an amount of from 4 to 20 phr.

The UHMWPE may be any suitable UHMWPE. If desired, the UHMWPE may have a size in a range of from 10 to 200 micrometers and/or a molecular weight in a range of from 500,000 to 11,000,000. It may also have a standard bulk density of 0.4 g/cm³ or greater, and/or a low bulk density of 0.25 g/cm³ or less. If desired, the UHMWPE may be present in an amount of from 2 to 50 phr, advantageously from 5 to 13 phr. Also, if desired, the UHMWPE may be present in an amount of from 5 to 50 phr, or in an amount of from 2 to 3 phr. One example of a suitable UHMWPE is GUR® 4120 from the Ticona Company. GUR® 4120 has an average molecular weight of 5,000,000 g/mol, as calculated using Margolies' equation (M=5.37 104[η]^{1.49} where η is in dl/g).

### Example

The following example further illustrates several aspects of the invention.

In this example, tread cap compositions that included an amount of UHMWPE, and in some cases, an additional amount of a mineral oil softener, were compared with a tread cap composition that did not include these ingredients. In addition, tread cap compositions in which the UHMWPE was added during a first non-productive mix stage were compared with tread cap compositions in which the UHMWPE was added in a subsequent cold-remilling stage.

With reference to Table I, sample A was the control sample, and did not include any UHMWPE or additional mineral oil softener. In the first non-productive mix stage, ingredients were added to a lab Banbury mixer in the amounts shown in Table I, and mixed for 4.5 minutes to a temperature of 160°C. In a second non-productive mix stage, the mixture resulting from the first non-productive mix stage was mixed for 4.5 minutes to a temperature of 160°C.

The contents of the mixer then were cooled to a temperature of 23°C over a period of about 600 minutes. Then the productive-mix-stage ingredients were added to the mixture, in the amounts shown in Table I; and the ingredients were mixed for 2 minutes to a temperature of 110°C.

With reference to Table I, samples B and D were prepared using processing parameters identical to those of sample A. Samples C and E were prepared using those same processing parameters, as well as a third non-productive mix stage. This third mix stage was a cold remill of the second mix stage, with the ingredients being mixed for 2 minutes to a temperature of 110°C. In samples B and D, the UHMWPE was added during the first non-productive mix stage; whereas in samples C and E, the UHMWPE was added during the third non-productive mix stage. Also, samples D and E included an additional amount (5phr) of the mineral oil softener.

**Table I**

| | Samples | | | | |
|---|---|---|---|---|---|
| | A | B | C | D | E |
| ***First non-productive mix stage*** | | | | | |
| BR rubber¹ | 45 | 45 | 45 | 45 | 45 |
| S-SBR (55phr) extended with TDAE oil² (20.63phr) | 75.63 | 75.63 | 75.63 | 75.63 | 75.63 |
| Antioxidants/Antiozonants³ | 4 | 4 | 4 | 4 | 4 |
| TDAE oil⁴ | 19.38 | 19.38 | 19.38 | 24.38 | 24.38 |
| Fatty acid ⁵ | 3 | 3 | 3 | 3 | 3 |
| TESPD silane coupling agent⁶ | 13.13 | 13.13 | 13.13 | 13.13 | 13.13 |
| UHMWPE⁷ | | 5 | | 5 | |
| Silica⁸ | 105 | 105 | 105 | 105 | 105 |

| ***Second non-productive mix stage*** | | | | | |
|---|---|---|---|---|---|
| ***Third non-productive mix stage*** | Remill of second non-productive mix stage | | | | |
| UHMWPE⁷ | | | 5 | | 5 |

| ***Productive mix stage*** | | | | | |
|---|---|---|---|---|---|
| Antioxidants/Antiozonants⁹ | 0.5 | 0.5 | 0.5 | 0.5 | 0.5 |
| Zinc oxide¹⁰ | 2.5 | 2.5 | 2.5 | 2.5 | 2.5 |
| Sulfur (elemental) | 1.4 | 1.4 | 1.4 | 1.4 | 1.4 |
| Sulfenamide type accelerator¹¹ | 1.5 | 1.5 | 1.5 | 1.5 | 1.5 |
| Co-accelerator DPG¹² | 2.4 | 2.4 | 2.4 | 2.4 | 2.4 |

| | | | | | |
|---|---|---|---|---|---|
| ¹Budene 1207 | | | | | |
| ²SLR 4630 | | | | | |
| ³6-PPD (2.5phr), refined paraffin wax (0.5phr), and microcrystalline wax (1 phr) | | | | | |
| ⁴Vivatec 500 | | | | | |
| ⁵Stearic acid | | | | | |
| ⁶X-266S | | | | | |
| ⁷GUR 4120 | | | | | |
| ⁸Degussa VN-2 type (125m²/g) | | | | | |
| ⁹DTPD (mixed aryl-p-phenylenediamines) | | | | | |
| ¹⁰Untreated French process | | | | | |
| ¹¹CBS | | | | | |
| ¹²Diphenylguanidine | | | | | |

**Table II**

| | | A | B | C | D | E |
|---|---|---|---|---|---|---|
| Specific gravity | 23°C | 100 | 100 | 100 | 99 | 99 |
| Mooney viscosity | MS (1+1.5, 100°C) | 100 | 112 | 98 | 108 | 88 |
| Rheometer 160C | Amount | 100 | 99 | 106 | 91 | 93 |
| | T90 | 100 | 95 | 95 | 104 | 95 |
| RPA (550), 1Hz, 100C | G' 1% | 100 | 102 | 103 | 90 | 90 |
| | tan d 10% | 100 | 98 | 93 | 97 | 94 |
| Hardness | Shore A 23°C | 100 | 114 | 104 | 105 | 103 |
| Ring modulus 23C | Elongation | 100 | 96 | 89 | 104 | 99 |
| | Mod 100% | 100 | 171 | 129 | 134 | 115 |
| | Mod 300% | 100 | 129 | 126 | 108 | 110 |
| | Tensile strength | 100 | 110 | 100 | 104 | 103 |
| Zwick rebound | Rebound 23°C | 100 | 97 | 98 | 97 | 99 |
| Abrasion | DIN Abrasion | 100 | 113 | 92 | 115 | 99 |
| Metravib, 1.5%, 7.8 Hz | G' -30°C | 100 | 105 | 106 | 100 | 98 |
| | tan δ -20°C | 100 | 100 | 102 | 101 | 104 |

With reference to Table II, the experimental results show that samples BE performed quite well in comparison with the control (sample A). For example, the G' -30°C and tan δ -20°C data for these samples (B-E) are comparable with the control, indicating that such tread caps would perform well in wet and/or winter conditions. At the same time, the hardness values for samples C-E, and the Mooney viscosity values for samples C and E, remained relatively low.

## Claims

1. A method of making a tire tread-cap composition, based upon parts by weight per 100 parts by weight of rubber ("phr"), the method comprising the steps of:
mixing, at a temperature in a range of from 135°C to 180°C, ingredients including:
100 parts by weight of at least one conjugated diene-based elastomer;
from 30 phr to 130 phr of at least one reinforcing filler;
from 2 phr to 55 phr of at least one oil softener selected from the group consisting of a mineral oil having a PCA content of less than 3% by weight, a vegetable oil, and combinations thereof; and
from 4 phr to 20 phr of at least one silane coupling agent, thereby forming a first mixture;
subsequently mixing, at a temperature of less than about 135°C, ingredients including:
the first mixture; and
from 2 phr to 50 phr of an ultra high molecular weight polyethylene ("UHMWPE").

2. The method of claim 1, wherein the reinforcing filler is selected from the group consisting of silica, carbon black, and combinations thereof.

3. The method of claim 1, wherein the reinforcing filler does not include carbon black.

4. The method of claim 1, wherein the oil softener is selected from the group consisting of a treated distillate aromatic extract ("TDAE") oil, a mild extraction solvate ("MES") oil, a special residual aromatic extract ("S-RAE"), and combinations thereof.

5. The method of claim 1, wherein the silane coupling agent is selected from the group consisting of bis-3-(triethoxysilylpropyl) disulfide ("TESPD"), bis-3-(triethoxysilylpropyl) tetrasulfide ("TESPT"), a blocked mercaptosilane, and combinations thereof.

6. The method of at least one of the previous claims, wherein the UHMWPE of the subsequently mixing step is present in an amount of from 5 phr to 50 phr, alternately from 5 phr to 13 phr.

7. The method of claim 6, wherein the UHMWPE of the subsequently mixing step is present in an amount of from 2 phr to 3 phr.

8. The method of at least one of the previous claims, wherein the temperature of the subsequently mixing step is less than 125°C, or wherein the temperature of the subsequently mixing step is in a range of from 90°C to 124°C.

9. The method of at least one of the previous claims, further comprising the step of adding a curative.

10. A tire comprising a tread cap made according to the method of any of the previous claims.
